# FASCICULE DE BREVET EUROPEEN

(11) **EP 3 179 597 B1**
(45) Date de publication et mention de la délivrance du brevet: **01.09.2021**
(21) Numéro de dépôt: 16202477.2
(22) Date de dépôt: 06.12.2016
(51) Int. Cl.: H02J 7/00, B60L 53/16

(54) **DISPOSITIF DE FOURNITURE D'ELECTRICITE MONOPHASEE ET TRIPHASEE AMELIORE**
VERBESSERTE VORRICHTUNG ZUR LIEFERUNG VON EINPHASEN- UND DREIPHASEN-STROM
IMPROVED DEVICE FOR SUPPLYING SINGLE-PHASE AND THREE-PHASE ELECTRICITY

(30) Priorité: 09.12.2015 FR 1562091
(43) Date de publication de la demande: 14.06.2017
(73) Titulaire: DRIVECO, 20251 Pancheraccia (FR)
(72) Inventeur: FRANSEN, Tristan, 83700 St Raphaël (FR)
(74) Mandataire: Plasseraud IP

(56) Documents cités:
- EP-A1- 2 447 106
- EP-A2- 2 325 974
- DE-A1-102010 063 790

## Description

L'invention concerne un dispositif de fourniture d'électricité.

Certains équipements électriques, tels que des moteurs ou des véhicules électriques, sont adaptés pour recevoir en entrée de l'électricité monophasée ou bien triphasée, et à fonctionner à partir de cette électricité.

Par exemple, pour un véhicule électrique, l'électricité est emmagasinée dans un dispositif de stockage et est ultérieurement restituée à divers composants qu'il comprend, tels qu'un moteur électrique assurant tout ou partie de la propulsion du véhicule.

En ce qui concerne les véhicules électriques, certains des équipements prévus pour assurer leur recharge en énergie électrique sont conçus pour fonctionner selon une approche « tout ou rien » dans le cadre de laquelle si la puissance électrique mise à leur disposition est suffisante, ils délivrent leur puissance électrique nominale. Un exemple est le document EP2447106.

Si, à l'inverse, cette puissance n'est pas suffisante, la fourniture d'énergie électrique est interrompue jusqu'à ce que cette puissance disponible redevienne suffisante.

Une approche développée pour pallier certains inconvénients de cette approche « tout ou rien » procède d'une modulation de la puissance électrique fournie en fonction de la puissance disponible. Ainsi, la puissance électrique effectivement fournie au véhicule est ajustée pour tenir compte de la puissance disponible, et prend par exemple une valeur comprise entre 15% de la puissance nominale du dispositif de recharge, et 100% de cette puissance nominale.

Toutefois, les équipements fonctionnement selon ce schéma présentent également des inconvénients. En effet, ils sont prévus pour la fourniture d'une électricité monophasée ou bien pour la fourniture d'une électricité triphasée.

De ce fait, la plage de puissances qu'ils sont adaptées pour fournir est restreinte, de sorte qu'il peut s'avérer nécessaire de modifier l'équipement auquel un véhicule donné est raccordé pour sa recharge en énergie électrique.

L'invention vise à améliorer la situation.

A cet effet, l'invention concerne un dispositif adapté pour sélectivement fournir en sortie une électricité monophasée ou une électricité triphasée, le dispositif comprenant :
- un premier conducteur de phase pour la fourniture d'une phase de l'électricité monophasée,
- un deuxième et un troisième conducteurs de phase pour la fourniture, conjointement au premier conducteur de phase, de trois phases respectives de l'électricité triphasée,
le dispositif comprenant en outre :
- au moins un contacteur agencé pour sélectivement fermer ou ouvrir les deuxième et troisième conducteurs de phase, et
- un module de commande configuré pour commander le contacteur pour réaliser sélectivement la fermeture ou l'ouverture des deuxième et troisième conducteurs de phase pour le basculement entre un mode de fonctionnement triphasé dans lequel le dispositif est configuré pour fournir de l'électricité triphasée, et un mode de fonctionnement monophasé dans lequel le dispositif est configuré pour fournir de l'électricité monophasée.

Selon un aspect de l'invention, le dispositif comprend en outre un deuxième contacteur agencé pour sélectivement fermer ou ouvrir au moins le premier conducteur de phase.

Selon un aspect de l'invention, le deuxième contacteur est en outre agencé pour réaliser l'ouverture et la fermeture des deuxième et troisième conducteurs de phase.

Selon un aspect de l'invention, le deuxième contacteur est configuré pour réaliser l'ouverture ou la fermeture des premier, deuxième et troisième conducteurs de phase simultanément.

Selon un aspect de l'invention, le dispositif comprend en outre un conducteur de neutre adapté pour évacuer une électricité résiduelle.

Selon un aspect de l'invention, le deuxième contacteur est en outre configuré pour réaliser sélectivement l'ouverture ou la fermeture du conducteur de neutre.

Selon un aspect de l'invention, le dispositif est un dispositif de recharge de véhicule électrique et est conforme au Mode 3, ledit Mode 3 étant défini par une norme relative aux systèmes de charges conductives pour véhicules électriques, telle que la norme européenne CEI 61851-1.

Le dispositif est adapté pour fournir en sortie une puissance électrique de sortie déterminée à partir d'une puissance de consigne, la puissance de consigne étant déterminée à partir d'une puissance disponible mise à disposition du dispositif par une source d'énergie électrique.

Selon un aspect de l'invention, dans le mode de fonctionnement monophasé, le dispositif de recharge est adapté pour faire varier la puissance électrique de sortie dans une première plage de valeurs ayant une borne supérieure, et, dans le mode de fonctionnement triphasé, le dispositif de recharge est adapté pour faire varier la puissance électrique fournie en sortie dans une deuxième plage de valeurs ayant une borne inférieure.

Selon un aspect de l'invention, le module de commande est configuré pour commander le contacteur pour l'ouverture des deuxième et troisième conducteurs de charge en réponse à la détection du fait que la différence entre la puissance de consigne et la borne inférieure est inférieure à une première valeur prédéterminée.

Selon un aspect de l'invention, le module de commande est configuré pour commander le contacteur pour la fermeture des deuxième et troisième conducteurs de phase en réponse à la détection du fait que la différence entre la borne supérieure et la puissance de consigne est inférieure à une deuxième valeur prédéterminée.

Selon un aspect de l'invention, le dispositif est adapté pour faire varier la puissance électrique de sortie entre 1,4 kW et 43,5 kW, le dispositif étant adapté pour varier la puissance électrique fournie en sortie entre 1,4 kW et 7,3 kW en mode de fonctionnement monophasé, et entre 6,9 kW et 43,5 kW en mode de fonctionnement triphasé.

L'invention concerne en outre une borne de recharge adaptée pour recharger un équipement électrique en énergie électrique, la borne de recharge comprenant un dispositif tel que défini ci-dessus.

L'invention concerne en outre un équipement électrique configuré pour fonctionner à partir d'énergie électrique, l'équipement électrique comprenant un dispositif tel que défini ci-dessus.

Selon un aspect de l'invention, l'équipement électrique est un véhicule électrique configuré pour se propulser au moins en partie à partir d'énergie électrique.

L'invention concerne en outre un ensemble adapté pour la fourniture simultanée d'électricité monophasée et/ou triphasée à une pluralité d'équipements électriques, l'ensemble comprenant une pluralité de dispositifs de fourniture sélective d'électricité monophasée et triphasée, au moins un desdits dispositifs de fourniture sélective d'électricité monophasée et triphasée comprenant un dispositif tel que défini ci-dessus.

L'invention sera mieux comprise à la lecture de la description détaillée qui va suivre, donnée uniquement à titre d'exemple et faite en référence aux Figures annexées, sur lesquelles :
- La Figure 1 est une illustration d'un dispositif selon l'invention ;
- La Figure 2 est un diagramme-bloc illustrant le fonctionnement du dispositif selon l'invention ;
- La Figure 3 illustre un ensemble selon l'invention ; et
- La Figure 4 illustre une variante du dispositif selon l'invention.

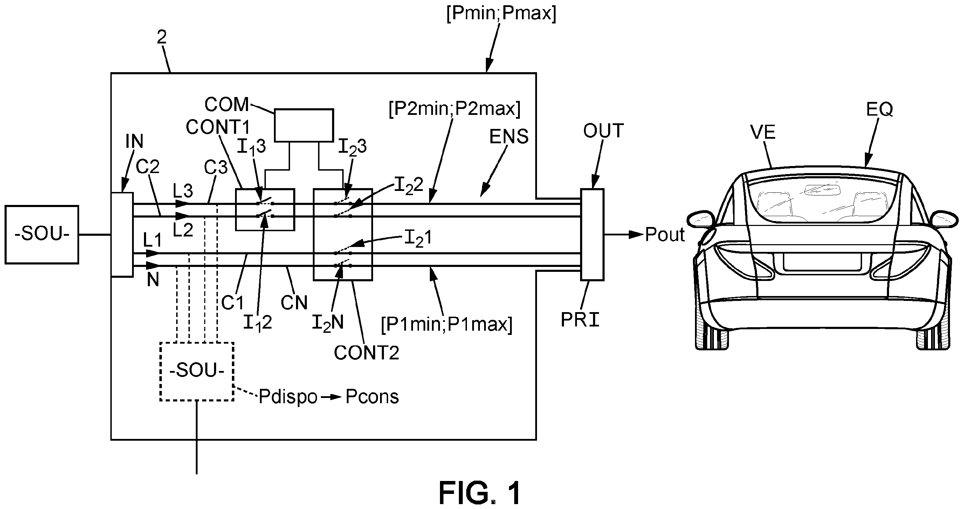

La Figure 1 illustre un dispositif 2 selon l'invention.

Le dispositif 2 est configuré pour fournir de l'électricité à un équipement EQ. L'équipement EQ est un équipement électrique fonctionnant à partir d'énergie électrique.

L'équipement EQ est par exemple un moteur. Préférentiellement, l'équipement EQ est un véhicule électrique VE prévu pour fonctionner au moins en partie à partir d'électricité. Le véhicule VE comprend les équipements nécessaires à cet effet, qui sont connus en eux-mêmes et ne constituent pas le cœur de la présente invention.

Dans le cadre de l'invention, le dispositif 2 est configuré pour sélectivement fournir à l'équipement EQ une électricité triphasée et une électricité monophasée. Autrement dit, il est adapté pour fournir, à un instant donné, de l'électricité monophasée ou de l'électricité triphasée, et est adapté pour sélectivement basculer de manière réversible entre un état dans lequel il délivre de l'électricité monophasée et un état dans lequel il délivre de l'électricité triphasée.

Par « électricité triphasée » et « électricité monophasée », on entend que l'électricité est fournie par l'intermédiaire de trois phases définies par trois tensions ou trois courants sinusoïdaux de même fréquence mais déphasés, respectivement d'une phase unique définie par une tension ou un courant.

Avantageusement, le dispositif 2 est un dispositif de recharge adapté pour réaliser la recharge en énergie électrique de l'équipement EQ. Avantageusement, le dispositif 2 est un dispositif de recharge de véhicules électriques tels que le véhicule VE.

Avantageusement, le dispositif 2 est un dispositif de recharge pour véhicule électrique et est conforme au Mode 3, le Mode 3 étant défini par une norme relative aux systèmes de charges conductives pour véhicules électriques, telle que la norme européenne CEI 61851-1.

Par exemple, le dispositif 2 est ou fait partie d'une borne de recharge de véhicule électrique.

Alternativement, dans une autre réalisation, le dispositif 2 fait partie de l'équipement EQ. Aussi, dans certaines réalisations, le dispositif 2 est embarqué à bord d'un véhicule électrique.

Le dispositif 2 comprend une entrée IN d'électricité connectée à une source SOU d'énergie électrique, et une sortie OUT d'électricité par laquelle le dispositif 2 est configuré pour délivrer l'électricité à l'équipement EQ.

La source SOU est par exemple située à l'extérieur du dispositif 2. Cette source SOU est par exemple raccordée à l'entrée IN par l'intermédiaire d'un réseau de distribution. Avantageusement, la source SOU est raccordée à l'entrée par l'intermédiaire d'une connectique adaptée pour la fourniture à l'entrée d'une électricité elle-même monophasée ou triphasée.

Par ailleurs, la sortie OUT comprend par exemple une prise de recharge PRI destinée à être couplée à une prise de forme complémentaire que comporte l'équipement EQ pour l'alimentation en énergie électrique de ce dernier (les dimensions respectives de la prise PRI et de la prise complémentaire ne sont pas respectées en Figure 1).

Le dispositif 2 comprend en outre un ensemble ENS de distribution d'électricité monophasée et triphasée adapté pour l'acheminement d'électricité à l'équipement EQ via la sortie OUT. Dans l'exemple de la Figure 1, cet ensemble ENS est agencé pour le raccordement électrique de l'entrée IN à la sortie OUT.

L'ensemble ENS comprend au moins un premier, un deuxième et un troisième conducteurs de phase C1, C2, C3. Dans l'exemple de la Figure 1, les conducteurs de phase s'étendent entre l'entrée IN et la sortie OUT.

Le premier conducteur de phase C1 est configuré pour la transmission de l'électricité monophasée, c'est-à-dire pour la fourniture de l'unique phase notée L1 de l'électricité fournie en sortie lorsque le dispositif 2 fournit en sortie de l'électricité monophasée.

Les deuxième et troisième conducteurs de phase C2, C3 sont configurés pour la transmission, conjointement au premier conducteur de phase C1, de la phase L1 (via le conducteur C1) ainsi que de phases L2 et L3 respectivement fournie par le deuxième et le troisième conducteur C2, C3 lorsque le dispositif 2 fournit en sortie une électricité triphasée. Les phases L2 et L3 forment ainsi les deux phases supplémentaires via lesquelles l'électricité triphasée est acheminée par rapport à une fourniture d'électricité monophasée.

Avantageusement, l'ensemble ENS comprend en outre un conducteur de neutre CN. Le conducteur de neutre CN est notamment adapté pour l'évacuation d'une électricité résiduelle. Le conducteur de neutre CN réalise le raccordement de l'entrée IN à la sortie OUT.

Dans l'exemple de réalisation ci-dessus, la source SOU a été décrite comme extérieure au dispositif 2.

Toutefois, en variante, la source SOU est incluse dans le dispositif 2 (en pointillés sur la Figure 1).

Dans cette réalisation, le dispositif 2 est par exemple dépourvu d'entrée IN. En outre, l'ensemble ENS est configuré pour le raccordement de la source SOU à la sortie OUT.

Par ailleurs, dans l'exemple ci-dessus, le raccordement entre l'entrée ou la source et la sortie est mis en œuvre au seul moyen des conducteurs de phase et de neutre. Toutefois, en variante, l'ensemble ENS comprend en outre des moyens de connexion permettant, conjointement aux conducteurs C1, C2, C3, CN, le raccordement de l'entrée/de la source à la sortie. Ces moyens de connexion sont par exemple interposés entre l'entrée IN ou la source SOU (si elle est interne au dispositif 2) et l'ensemble de distribution ENS.

Dans le contexte de l'invention, le dispositif 2 comprend en outre un contacteur CONT1 agencé pour sélectivement fermer ou ouvrir les deuxième et troisième conducteurs de phase C2, C3.

Le contacteur CONT1 est par exemple agencé au niveau de ces conducteurs C2, C3 entre l'entrée IN et la sortie OUT.

Le contacteur CONT1 comprend par exemple, pour chacun des conducteurs C2, C3, un interrupteur I₁2, I₁3 actionnable entre un état ouvert dans lequel le conducteur de phase C2, C3 correspondant est ouvert et prévient le passage d'électricité et donc de la phase L2, L3 correspondante, et un état fermé dans lequel le conducteur de phase C2, C3 correspondant est fermé et autorise ainsi le passage de l'électricité et de la phase L2, L3 correspondante.

L'état ouvert des interrupteurs est représenté en trait plein sur la Figure 1, et leur état fermé en pointillés.

Avantageusement, le contacteur CONT1 est configuré pour réaliser l'ouverture ou la fermeture des conducteurs de phase C2, C3 de manière simultanée pour ces deux contacteurs.

Le contacteur CONT1 est indépendant du premier conducteur de phase C1 et du conducteur de neutre CN. Autrement dit, il n'est pas agencé pour en réaliser l'ouverture et la fermeture.

En outre, avantageusement, il est dédié à l'ouverture et à la fermeture des conducteurs de phase C2, C3. En d'autres termes, il n'est pas configuré pour réaliser d'autres fonctions.

En outre, avantageusement, le dispositif 2 comprend un deuxième contacteur C2 agencé pour sélectivement fermer ou ouvrir au moins le premier conducteur de phase C1 et, le cas échéant, le conducteur de neutre CN.

A cet effet, le deuxième contacteur CONT2 est par exemple interposé au niveau du premier conducteur de phase C1 et du conducteur de neutre CN entre l'entrée ou la source, et la sortie OUT.

Il comprend par exemple pour chacun de ces conducteurs un interrupteur I₂1, respectivement I₂N actionnable entre un état ouvert dans lequel le conducteur de phase C1, respectivement le conducteur de neutre CN est ouvert et prévient le passage d'électricité, et un état fermé dans lequel le conducteur de phase C1, respectivement le conducteur de neutre CN est fermé et autorise ainsi le passage de l'électricité (état ouvert en trait plein, état fermé en pointillés).

Avantageusement, le deuxième contacteur CONT2 est agencé pour en outre sélectivement fermer ou ouvrir les premier et deuxième conducteurs de phase C2, C3. A cet effet, il comprend en outre un interrupteur I₂2, respectivement I₂3 agencé au niveau du conducteur de phase C2, respectivement du conducteur de phase C3, et adapté pour basculer entre un état ouvert dans lequel il ouvre le conducteur associé et prévient le passage d'électricité en son sein, et un état fermé dans lequel il ferme le conducteur associé et ne prévient donc pas le passage d'électricité en son sein..

Dans cette réalisation, le deuxième contacteur CONT2 est configuré pour réaliser l'ouverture ou la fermeture des premier, deuxième et troisième conducteurs de phase simultanément. Il n'autorise alors pas l'ouverture ou la fermeture sélective d'une partie seulement des premier, deuxième et troisième conducteurs de phase

Le deuxième contacteur CONT2 est par exemple situé en aval du premier contacteur CONT1. En d'autres termes, le deuxième contacteur CONT2 est situé entre le premier contacteur CONT1 et la sortie OUT.

Conjointement aux contacteurs CONT1, CONT2, le dispositif 2 comprend un module de commande COM configuré pour commander les contacteurs pour sélectivement réaliser l'ouverture et la fermeture des conducteurs C1, C2, C3, CN.

Ainsi, le module de commande COM est configuré pour réaliser le basculement du dispositif 2 entre un mode de fonctionnement monophasé dans lequel le dispositif est configuré pour fournir de l'électricité monophasée, et un mode de fonctionnement triphasé dans lequel le dispositif est configuré pour fournir de l'électricité triphasée.

Dans le mode de fonctionnement monophasé, les conducteurs de phase C2 et C3 sont ouverts, et le conducteur de phase C1 et le conducteur de neutre CN sont fermés.

Dans le mode de fonctionnement triphasé, les trois conducteurs de phase C1, C2, C3 et le conducteur de neutre CN sont tous fermés.

Le module de commande COM est configuré pour commander au premier contacteur CONT1 l'ouverture ou la fermeture des conducteurs de phase C2 et C3 en fonction d'une puissance de consigne Pcons à partir de laquelle est déterminée la puissance électrique fournie par le dispositif 2 via la sortie OUT.

La valeur de la puissance de consigne Pcons est déterminée à partir d'une information de puissance électrique Pdispo rendue disponible pour le dispositif 2 par la source SOU. Cette information est par exemple déterminée par un organe du dispositif 2, tel que le module de commande COM, sur la base d'une détection de la puissance disponible Pdispo, ou bien à partir d'une information qui lui est envoyée. Cette information provient par exemple de la source SOU elle-même, d'un équipement que le dispositif 2 comprend ou d'un équipement extérieur avec lequel il est adapté pour communiquer.

Par exemple, dans le cadre de la détermination de la puissance de consigne Pcons, la puissance de consigne Pcons est prise égale à la puissance disponible Pdispo. Alternativement, elle est par exemple prise égale au produit de la puissance disponible et d'un facteur choisi, par exemple d'un facteur inférieur à 1.

De manière générale, une fois la puissance de consigne déterminée, une information représentative de la puissance de consigne Pcons est envoyée à l'équipement EQ, et celui-ci soutire alors la puissance de consigne au dispositif 2, de sorte que le dispositif fournit alors une puissance de sortie Pout correspondant à la puissance de consigne Pcons. Ce soutirage est réalisé en mode de fonctionnement monophasé ou en mode de fonctionnement triphasé en fonction de la configuration des contacteurs CONT1, CONT2.

On note que dans le cas de la recharge de véhicules électriques, l'information représentative de la puissance de consigne Pcons est par exemple une information d'ampérage autorisé, des informations correspondant à des puissances de consigne différentes différant par exemple seulement de par l'ampérage autorisé correspondant.

Le dispositif 2 est adapté pour fournir en sortie une puissance électrique Pout variable au sein d'une plage principale [Pmin ; Pmax] de valeurs. Cette plage principale correspond par exemple à la plage [1,4 kW ; 43,5 kW], ou encore à la plage [1,4 kW ; 22 kW].

Dans le cadre du mode de fonctionnement monophasé, le dispositif 2 est adapté pour fournir en sortie une puissance électrique contenue dans une première plage [P1min ; P1max] correspondant à une sous-plage de la plage principale. Cette première plage présente une borne supérieure P1max. On note que la borne P1min correspond avantageusement à la borne Pmin.

Dans le cadre du mode de fonctionnement triphasé, le dispositif 2 est adapté pour fournir en sortie une puissance électrique contenue dans une deuxième plage [P2min ; P2max] correspondant à une sous-plage de la plage principale. La deuxième plage est différente de la première plage. Cette deuxième plage présente une borne inférieure P2min.On note que la borne P2max correspond avantageusement à la borne Pmax.

Avantageusement, les première et deuxième plages se recoupent.

La première plage correspond par exemple à [1,4 kW ; **7,3 kW**] (borne supérieure en gras). La deuxième plage correspond par exemple à [**6,9 kW** ; 43,5 kW] ou à [**6,9 kW** ; 22kW] (borne inférieure en gras).

Par exemple, en monophasé, la tension fournie est de 230V pour toutes les valeurs de puissance fournie, l'ampérage variant de 6 A pour 1,4 kW à 32 A pour 7,3 kW, et en triphasé, la tension fournie est de 400 V et ne varie pas, l'ampérage variant lui de 10 A à 63 A.

Aussi, pour l'actionnement du contacteur CONT1, le module de commande COM est avantageusement configuré pour, dans le mode de fonctionnement monophasé, commander au premier contacteur CONT1 la fermeture des conducteurs de phase C2, C3 lorsque la différence entre la borne supérieure P1max de la première plage et la puissance de consigne Pcons est inférieure à une première valeur prédéterminée.

En outre, il est configuré pour, dans le mode de fonctionnement triphasé, commander au premier contacteur CONT1 l'ouverture des conducteurs de phase C2, C3 lorsque la différence entre la puissance de consigne Pcons et la borne inférieure P2min est inférieure à une deuxième valeur prédéterminée.

Avantageusement, les première et deuxième valeurs sont choisies de sorte que lorsque le basculement s'opère entre un mode donné et l'autre, la condition de passage vers le mode donné ne soit pas remplie.

On note que ces conditions de basculement sont équivalentes à la comparaison de la puissance de consigne à une première valeur seuil pour la première plage et à la comparaison de la puissance de consigne à une deuxième valeur seuil pour la deuxième plage.

La première valeur seuil est choisie proche de la borne supérieure P1max et inférieure à elle, et la deuxième valeur seuil est choisie proche de la borne P2min et supérieure à elle.

Avantageusement, la première valeur seuil est choisie supérieure à la deuxième valeur seuil, afin d'éviter le basculement intempestif entre les modes de fonctionnement.

Le fonctionnement du dispositif 2 va maintenant être décrit en référence aux Figures.

Initialement, les premiers et deuxième contacteurs sont par exemple ouverts, les conducteurs de phase et de neutre étant ouverts et empêchant le transit d'électricité en leur sein.

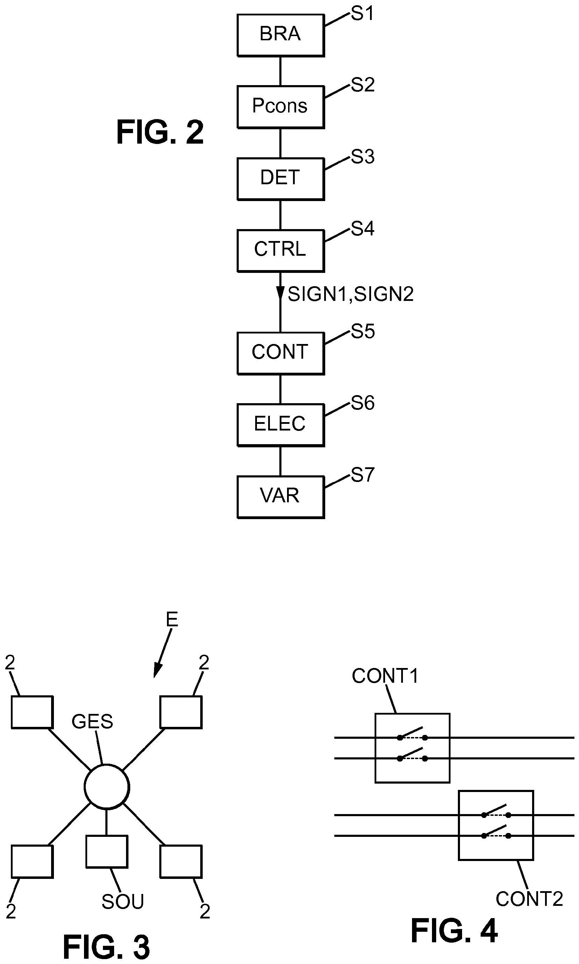

En référence à la Figure 2, lors d'une étape S1, la prise PRI est branchée sur l'équipement EQ, qui est par exemple un véhicule électrique VE.

Ce branchement est détecté par le dispositif 2. A cet effet, par exemple, le dispositif 2, par exemple plus spécifiquement le module de commande COM ou bien un autre équipement du dispositif 2, détecte une modification d'une tension pilote sur un fil pilote (non représenté) dont une extrémité dessert la prise PRI.

Suite à cette étape, l'équipement EQ et le dispositif 2 sont en communication et sont configurés pour échanger des informations nécessaires à la fourniture d'électricité à l'équipement EQ par le dispositif 2.

Lors d'une étape S2, le dispositif 2 détermine la puissance de consigne Pcons. A cet effet, il la détermine à partir de la puissance disponible Pdispo mise à disposition par la source SOU.

Alternativement, il détermine cette puissance Pcons à partir d'une information représentative de cette puissance et qui lui est fournie par un autre équipement.

On note que cette étape S2 peut se dérouler indépendamment de l'étape S1, c'est-à-dire indépendamment du fait qu'un équipement soit branché au dispositif 2.

Par exemple, cette étape S2 est menée de manière régulière par le dispositif 2.

Lors d'une étape S3, le module de commande COM détermine le mode de fonctionnement (monophasé ou triphasé) qui doit être mis en œuvre.

Pour ce faire, il commence par déterminer la plage à laquelle la puissance de consigne appartient parmi la première et la deuxième plage. Par exemple, il compare la puissance de consigne à tout ou partie des bornes de ces plages.

Une fois la plage déterminée, il détermine si la puissance de consigne appartient à la portion de la plage associée à l'autre mode de fonctionnement. En d'autres termes, il détermine si la différence entre la puissance de consigne et la borne pertinente (borne supérieure P1max pour la première plage, borne inférieure P2min pour la deuxième plage) (ou l'opposé de cette différence en fonction de la plage considérée) est inférieure à la valeur prédéterminée associée (première valeur prédéterminée pour la première plage, deuxième valeur prédéterminée pour la deuxième plage).

Ainsi, si la puissance de consigne Pcons se situe dans la première plage et la différence entre la borne supérieure P1max et la puissance de consigne est supérieure à la première valeur prédéterminée, le module de commande détermine que le mode de fonctionnement monophasé doit être mis en œuvre.

Si la puissance de consigne Pcons se situe dans la première plage et la différence entre la borne supérieure P1max et la puissance de consigne est inférieure à la première valeur prédéterminée, le module de commande détermine que le mode de fonctionnement triphasé doit être mis en œuvre.

Si la puissance de consigne Pcons se situe dans la deuxième plage et la différence entre la puissance de consigne et la borne inférieure P2max est inférieure à la deuxième valeur prédéterminée, le module de commande détermine que le mode de fonctionnement monophasé doit être mis en œuvre.

Si la puissance de consigne Pcons se situe dans la deuxième plage et la différence entre la puissance de consigne et la borne inférieure P2max est supérieure à la deuxième valeur prédéterminée, le module de commande détermine que le mode de fonctionnement triphasé doit être mis en œuvre.

Lors d'une étape S4, le module de commande COM génère au moins un premier signal de commande SIGN1 (Figure 2) destiné au premier contacteur CONT1. Ce signal est représentatif d'une commande pour le basculement du contacteur CONT1 des conducteurs associés (C2, C3) dans la configuration correspondant au mode de fonctionnement déterminé lors de l'étape S3.

En outre, il génère un deuxième signal de commande SIGN2 (Figure 2) destiné au deuxième contacteur CONT2. Ce signal est représentatif d'une commande pour le basculement du contacteur CONT2 dans la configuration fermée. Dans l'exemple de la Figure 1, cette configuration permet au premier contacteur CONT1 d'effectivement jouer son rôle de déterminant du mode de fonctionnement implémenté.

Ces signaux sont ensuite envoyés au contacteur CONT1, CONT2 correspondant.

Lors d'une étape S5, sur réception du signal de commande associé, le contacteur CONT1, respectivement CONT2, passe dans l'état correspondant. Par exemple, le contacteur CONT1 ferme ainsi les conducteurs de phase C2 et C3 en fermant ses interrupteurs I₁2, I₁3. Le contacteur CONT2 ferme les conducteurs de phase C1 à C3 et le conducteur de neutre CN en fermant ses interrupteurs I₂1 à I₂3 et I₂N.

Lors d'une étape S6, le dispositif 2 envoie à l'équipement EQ l'information représentative de la puissance de consigne Pcons. L'équipement soutire alors la puissance correspondante. Dans le cas d'un véhicule électrique, le dispositif 2 envoie l'information d'ampérage autorisé au véhicule VE. Celui-ci soutire alors l'ampérage autorisé en mode monophasé ou triphasé en fonction de la configuration des contacteurs CONT1, CONT2 mise en œuvre précédemment.

Lors d'une étape S7, en réponse à la détermination d'une nouvelle puissance de consigne, par exemple suite à une modification de la puissance disponible Pdispo, le module de commande COM détermine si le mode de fonctionnement courant doit être modifié.

Pour cela, il procède comme décrit ci-dessus et détermine si la nouvelle puissance de consigne Pcons a une valeur proche de la borne pertinente de la plage de puissance associé au mode de fonctionnement en vigueur.

Par exemple, pour le mode de fonctionnement monophasé, il détermine si la différence entre la borne P1max et la nouvelle puissance de consigne Pcons est inférieure à la première valeur prédéterminée, ou, le cas échéant, si la nouvelle puissance de consigne est supérieure à la première valeur seuil.

Si tel est le cas, il commande au contacteur CONT1 la fermeture des conducteurs de phase C2, C3, ce qui provoque la fin du mode de fonctionnement monophasé et la mise en œuvre du mode de fonctionnement triphasé.

Si tel n'est pas le cas, il commande le contacteur CONT1 pour le maintien en vigueur du mode de fonctionnement courant, et le mode de fonctionnement monophasé reste implémenté.

Pour le mode de fonctionnement triphasé, il détermine si la différence entre la nouvelle puissance de consigne et la borne P2min est inférieure à la première valeur prédéterminée, ou, le cas échéant, si la nouvelle puissance de consigne est inférieure à la deuxième valeur seuil.

Si tel est le cas, il commande au contacteur CONT1 l'ouverture des conducteurs de phase C2, C3, ce qui provoque la fin du mode de fonctionnement triphasé et la mise en œuvre du mode de fonctionnement monophasé.

Si tel n'est pas le cas, il commande le contacteur CONT1 pour le maintien en vigueur du mode de fonctionnement courant.

Le dispositif envoie alors à nouveau l'information de puissance de consigne à l'équipement EQ, qui ajuste alors la puissance soutirée en fonction de cette nouvelle information, et ce en monophasé ou triphasé en fonction de la configuration des contacteurs retenue, en particulier celle du contacteur CONT1.

La description donnée ci-dessus concerne un dispositif selon l'invention en tant que tel.

En référence à la Figure 3, l'invention concerne également un ensemble E adapté pour la fourniture simultanée d'électricité monophasée et/ou triphasée à une pluralité d'équipements EQ.

L'ensemble E correspond par exemple à un parc de bornes de recharge de véhicules électriques.

L'ensemble E comprend une pluralité de dispositifs de fourniture d'énergie électrique dont au moins un qui est ou comprend un dispositif 2 selon l'invention. Avantageusement, il comprend en outre un équipement de gestion GES auquel les dispositifs de fourniture d'énergie électrique sont raccordés.

Dans l'exemple de la Figure 3, l'ensemble E comprend par exemple quatre dispositifs selon l'invention. Ces dispositifs 2 sont par exemple des bornes de recharge de véhicule électrique.

L'équipement de gestion est connecté aux dispositifs 2 et est configuré pour communiquer avec ces dispositifs.

Il est en outre raccordé à une source SOU d'énergie électrique à partir de laquelle les dispositifs 2 délivrent de l'électricité. Cette source est par exemple commune à tous les dispositifs 2. Alternativement, elle est associée à une partie seulement des dispositifs de l'ensemble E, et l'ensemble E comprend ou est connecté à au moins une autre source d'énergie électrique.

Avantageusement, dans la réalisation de la Figure 3, la puissance de consigne d'un dispositif 2 donné est déterminée à partir d'une puissance disponible totale mise à disposition par la source, et du nombre d'équipements connectés à l'ensemble E et demandant à être alimentés en énergie électrique.

Par exemple, la puissance de consigne Pcons pour un dispositif 2 donné correspond à la puissance totale disponible divisée par le nombre de ces équipements.

La Figure 4 illustre une variante d'un dispositif 2 selon l'invention.

Dans le cadre de cette variante, la différence avec le dispositif 2 décrit ci-dessus réside dans le fait que le deuxième contacteur CONT2 est agencé pour réaliser l'ouverture et la fermeture du premier conducteur de phase C1 et du conducteur de neutre CN, mais pas des conducteurs C2 et C3. Autrement dit, le deuxième contacteur CONT2 n'est pas adapté pour réaliser l'ouverture ou la fermeture des conducteurs C2 et C3, seul le contacteur CONT1 étant adapté pour ce faire.

Les autres éléments du dispositif 2 sont identiques à ceux décrits précédemment.

Le dispositif selon l'invention présente plusieurs avantages.

En effet, la présence du contacteur CONT1 prévu pour l'ouverture et la fermeture sélective des conducteurs C2 et C3 permet de disposer d'un dispositif 2 adapté pour la fourniture d'électricité aussi bien en monophasé qu'en triphasé.

Ainsi, la plage de modulation de la puissance qui peut être fournie en sortie est élargie par rapport aux dispositifs existants.

Cet élargissement est particulièrement avantageux pour un ensemble E de plusieurs dispositifs, qui permet alors la recharge simultanée d'équipements électriques dans des configurations dans lesquelles les dispositifs existants sont tout simplement inopérants.

En particulier, par rapport à un ensemble de dispositifs à seul mode de fonctionnement triphasé, lorsque le nombre d'équipements à alimenter est élevé et que la puissance disponible est relativement faible, il se produit fréquemment que seulement une partie des équipements puisse être rechargée à un instant donné.

Or, du fait de l'élargissement de la plage de modulation des dispositifs 2, en particulier l'atteinte de valeurs bien plus basses que pour des dispositifs triphasés de l'art antérieur, l'ensemble E permet la recharge simultanée de tous les équipements à configuration de véhicules demandeurs et de puissance disponible identique.

Par ailleurs, ce résultat est obtenu de manière simple et fiable par la présence d'un contacteur, dont la structure et la commande sont de faible complexité.

En outre, l'invention peut être mise en œuvre de manière simple sur les dispositifs existants, au sein desquels est souvent présent un contacteur agencé tel que le deuxième contacteur, c'est-à-dire de façon à pouvoir ouvrir ou fermer simultanément les conducteurs de phase et le neutre.

## Revendications

1. Dispositif adapté pour sélectivement fournir en sortie une électricité monophasée ou une électricité triphasée, le dispositif comprenant :
- un premier conducteur de phase (C1) pour la fourniture d'une phase (L1) de l'électricité monophasée,
- un deuxième et un troisième conducteurs de phase (C2, C3) pour la fourniture, conjointement au premier conducteur de phase, de trois phases (L1, L2, L3) respectives de l'électricité triphasée,
le dispositif comprenant en outre :
- au moins un contacteur (CONT1) agencé pour sélectivement fermer ou ouvrir les deuxième et troisième conducteurs de phase (C2, C3), et
- un module de commande (COM) configuré pour commander le contacteur (CONT1) pour réaliser sélectivement la fermeture ou l'ouverture des deuxième et troisième conducteurs de phase (C2, C3) pour le basculement entre un mode de fonctionnement triphasé dans lequel le dispositif est configuré pour fournir de l'électricité triphasée, et un mode de fonctionnement monophasé dans lequel le dispositif est configuré pour fournir de l'électricité monophasée,
le dispositif étant caractérisé pour être adapté pour fournir en sortie une puissance électrique de sortie (Pout) déterminée à partir d'une puissance de consigne (Pcons), la puissance de consigne étant déterminée à partir d'une puissance disponible (Pdispo) mise à disposition du dispositif (2) par une source d'énergie électrique (SOU), via le module de commande (COM) commandant l'ouverture ou la fermeture du contacteur (CONT1).

2. Dispositif selon la revendication 1, dans lequel le dispositif comprend en outre un deuxième contacteur (CONT2) agencé pour sélectivement fermer ou ouvrir au moins le premier conducteur de phase (C1).

3. Dispositif selon la revendication 2, dans lequel le deuxième contacteur (CONT2) est en outre agencé pour réaliser l'ouverture et la fermeture des deuxième et troisième conducteurs de phase (C2, C3).

4. Dispositif selon la revendication 3, dans lequel le deuxième contacteur (CONT2) est configuré pour réaliser l'ouverture ou la fermeture des premier, deuxième et troisième conducteurs de phase (C1, C2, C3) simultanément.

5. Dispositif selon l'une quelconque des revendications précédentes, dans lequel le dispositif comprend en outre un conducteur de neutre (CN) adapté pour évacuer une électricité résiduelle.

6. Dispositif selon les revendications 2 et 5, dans lequel le deuxième contacteur (CONT2) est en outre configuré pour réaliser sélectivement l'ouverture ou la fermeture du conducteur de neutre.

7. Dispositif selon l'une quelconque des revendications précédentes, **caractérisé en ce qu'**il est un dispositif de recharge de véhicule électrique.

8. Dispositif selon l'une quelconque des revendications précédentes, dans lequel, dans le mode de fonctionnement monophasé, le dispositif est adapté pour faire varier la puissance électrique de sortie (Pout) dans une première plage de valeurs ([P1min ; P1max]) ayant une borne supérieure, et, dans le mode de fonctionnement triphasé, le dispositif est adapté pour faire varier la puissance électrique fournie en sortie dans une deuxième plage de valeurs ([P2min ; P2max]) ayant une borne inférieure.

9. Dispositif selon la revendication 8, dans lequel le module de commande est configuré pour commander le contacteur pour l'ouverture des deuxième et troisième conducteurs de charge en réponse à la détection du fait que la différence entre la puissance de consigne (Pcons) et la borne inférieure (P2min) est inférieure à une première valeur prédéterminée

10. Dispositif selon la revendication 8 ou 9, dans lequel le module de commande est configuré pour commander le contacteur pour la fermeture des deuxième et troisième conducteurs de phase en réponse à la détection du fait que la différence entre la borne supérieure (P1max) et la puissance de consigne (Pcons) est inférieure à une deuxième valeur prédéterminée.

11. Dispositif selon l'une quelconque des revendications précédentes, dans lequel le dispositif est adapté pour faire varier la puissance électrique de sortie entre 1,4 kW et 43,5 kW, le dispositif étant adapté pour varier la puissance électrique fournie en sortie entre 1,4 kW et 7,3 kW en mode de fonctionnement monophasé, et entre 6,9 kW et 43,5 kW en mode de fonctionnement triphasé.

12. Borne de recharge adaptée pour recharger un équipement électrique en énergie électrique, **caractérisée en ce que** la borne de recharge comprend un dispositif selon l'une quelconque des revendications précédentes.

13. Equipement électrique configuré pour fonctionner à partir d'énergie électrique, **caractérisé en ce que** l'équipement électrique comprend un dispositif selon l'une quelconque des revendications 1 à 11.

14. Equipement électrique selon la revendication 13, **caractérisé en ce que** l'équipement électrique est un véhicule électrique configuré pour se propulser au moins en partie à partir d'énergie électrique.

15. Ensemble adapté pour la fourniture simultanée d'électricité monophasée et/ou triphasée à une pluralité d'équipements électriques, l'ensemble comprenant une pluralité de dispositifs de fourniture sélective d'électricité monophasée et triphasée, au moins un desdits dispositifs de fourniture sélective d'électricité monophasée et triphasée comprenant un dispositif selon l'une quelconque des revendications 1 à 11.

## Patentansprüche

1. Vorrichtung, die angepasst ist, am Ausgang selektiv einen Einphasenstrom oder einen Dreiphasenstrom bereitzustellen, wobei die Vorrichtung aufweist:
- einen ersten Phasenleiter (C1) zum Liefern einer Phase (L1) des Einphasenstroms,
- einen zweiten und dritten Phasenleiter (C2, C3), um gemeinsam mit dem ersten Phasenleiter drei jeweilige Phasen (L1, L2, L3) des Dreiphasenstroms zu liefern,
wobei die Vorrichtung ferner aufweist:
- mindestens einen Schalter (CONTI), der eingerichtet ist, um den zweiten und dritten Phasenleiter (C2, C3) selektiv zu schließen oder zu öffnen, und
- ein Steuermodul (COM) zum Steuern des Schalters (CONT1) zum selektiven Schließen oder Öffnen des zweiten und dritten Phasenleiters (C2, C3) zum Wechseln zwischen einem Dreiphasen-Betriebsmodus, in dem die Vorrichtung konfiguriert ist, den Dreiphasenstrom zu liefern, und einem Einphasen-Betriebsmodus, in dem die Vorrichtung konfiguriert ist, den Einphasenstrom zu liefern,
wobei die Vorrichtung **dadurch gekennzeichnet ist, dass** sie angepasst ist, um mit Hilfe des Steuermoduls (COM), das das Öffnen und das Schließen des Schalters (CONT1) steuert, am Ausgang eine aus einer Soll-Leistung (Pcons) bestimmte elektrische Ausgangsleistung (Pout) zu liefern, wobei die Soll-Leistung sich aus einer verfügbaren Leistung (Pdispo), die der Vorrichtung (2) von einer elektrischen Energiequelle (SOU) zur Verfügung gestellt wird, bestimmt.

2. Vorrichtung nach Anspruch 1, in welcher die Vorrichtung ferner einen zweiten Schalter (CONT2) aufweist, der eingerichtet ist, um mindestens den ersten Phasenleiter (C1) selektiv zu schließen oder zu öffnen.

3. Vorrichtung nach Anspruch 2, in welcher der zweite Schalter (CONT2) ferner eingerichtet ist, um das Öffnen und das Schließen des zweiten und dritten Phasenleiters (C2, C3) zu realisieren.

4. Vorrichtung nach Anspruch 3, in welcher der zweite Schalter (CONT2) konfiguriert ist, um das Öffnen oder das Schließen des ersten, zweiten und dritten Phasenleiters (C1, C2, C3) gleichzeitig zu realisieren.

5. Vorrichtung nach einem der vorstehenden Ansprüche, in welcher die Vorrichtung ferner einen Neutralleiter (CN) aufweist, der angepasst ist, um einen Reststrom abzuführen.

6. Vorrichtung nach Anspruch 2 und 5, in welcher der zweite Schalter (CONT2) ferner konfiguriert ist, um selektiv das Öffnen oder das Schließen des Neutralleiters zu realisieren.

7. Vorrichtung nach einem der vorstehenden Ansprüche, **dadurch gekennzeichnet, dass** sie eine Vorrichtung zum Wiederaufladen eines Elektrofahrzeugs ist.

8. Vorrichtung nach einem der vorstehenden Ansprüche, in welcher in dem Einphasen-Betriebsmodus die Vorrichtung angepasst ist, um die elektrische Ausgangsleistung (Pout) in einem ersten Wertebereich ([P1min; P1max]) mit einer oberen Grenze variieren zu lassen, und in dem Dreiphasen-Betriebsmodus die Vorrichtung angepasst ist, um die am Ausgang bereitgestellte elektrische Leistung in einem zweiten Wertebereich ([P2min; P2max]) mit einer unteren Grenze variieren zu lassen.

9. Vorrichtung nach Anspruch 8, in welcher das Steuermodul konfiguriert ist, um als Antwort auf die Detektion der Tatsache, dass die Differenz zwischen der Soll-Leistung (Pcons) und der unteren Grenze (P2min) kleiner als ein erster vorgegebener Wert ist, den Schalter zum Öffnen des zweiten und dritten Phasenleiters zu steuern.

10. Vorrichtung nach Anspruch 8 oder 9, in welcher das Steuermodul konfiguriert ist, um als Antwort auf die Detektion der Tatsache, dass die Differenz zwischen der oberen Grenze (Plmax) und der Soll-Leistung (Pcons) kleiner als ein zweiter vorgegebener Wert ist, den Schalter zum Schließen des zweiten und dritten Ladeleiters (Phasenleiters) zu steuern.

11. Vorrichtung nach einem der vorstehenden Ansprüche, in welcher die Vorrichtung angepasst ist, um die elektrische Ausgangsleistung zwischen 1,4 kW und 43,5 kW variieren zu lassen, wobei die Vorrichtung angepasst ist, um die am Ausgang bereitgestellte elektrische Leistung zwischen 1,4 kW und 7,3 kW im Einphasen-Betriebsmodus und zwischen 6,9 kW und 43,5 kW im Dreiphasen-Betriebsmodus variieren zu lassen.

12. Wiederaufladesäule zum Wiederaufladen einer elektrischen Einrichtung mit elektrischer Energie, **dadurch gekennzeichnet, dass** die Wiederaufladesäule eine Vorrichtung nach einem der vorstehenden Ansprüche aufweist.

13. Elektrische Einrichtung, die konfiguriert ist, um mit elektrischer Energie betrieben zu werden, **dadurch gekennzeichnet, dass** die elektrische Einrichtung eine Vorrichtung nach einem der Ansprüche 1 bis 11 aufweist.

14. Elektrische Einrichtung nach Anspruch 13, **dadurch gekennzeichnet, dass** die elektrische Einrichtung ein Elektrofahrzeug ist, das konfiguriert ist, um mindestens teilweise mit elektrischer Energie angetrieben zu werden.

15. Anordnung zum gleichzeitigen Liefern von Einphasenstrom und/oder Dreiphasenstrom an mehrere elektrische Einrichtungen, wobei die Anordnung mehrere Vorrichtungen zum selektiven Liefern von Einphasen- und Dreiphasenstrom aufweist, wobei mindestens eine der Vorrichtungen zum selektiven Liefern von Einphasen- und Dreiphasenstrom eine Vorrichtung nach einem der Ansprüche 1 bis 11 aufweist.

## Claims

1. A device adapted to selectively output a single-phase electricity or a three-phase electricity, the device comprising
- a first phase conductor (C1) for supplying a phase (L1) of the single-phase electricity,
- a second and a third phase conductors (C2, C3) for supplying, in conjunction with the first phase conductor, three respective phases (L1, L2, L3) of the three-phase electricity,
the device further comprising
- at least one contactor (CONT1) arranged to selectively close or open the second and third phase conductors (C2, C3), and
- a control module (COM) configured to control the contactor (CONT1) to selectively carry out the closure or the opening of the second and third phase conductors (C2, C3) for switching between a three-phase operating mode in which the device is configured to supply three-phase electricity, and a single-phase operating mode in which the device is configured to supply single-phase electricity,
the device being characterised to be adapted to output an output electric power (Pout) determined from a setpoint power (Pcons), the setpoint power being determined from an available power (Pdispo) made available to the device (2) by an electrical energy source (SOU), via the control module (COM) controlling the opening or closing of the contactor (CONT1).

2. The device according to claim 1, wherein the device further comprises a second contactor (CONT2) arranged to selectively close or open at least the first phase conductor (C1).

3. The device according to claim 2, wherein the second contactor (CONT2) is further arranged to carry out the opening and closing of the second and third phase conductors (C2, C3).

4. The device according to claim 3, wherein the second contactor (CONT2) is configured to carry out the opening or closing of the first, second and third phase conductors (C1, C2, C3) simultaneously.

5. The device according to any one of the preceding claims, wherein the device further comprises a neutral conductor (CN) adapted to remove a residual electricity.

6. The device according to claims 2 and 5, wherein the second contactor (CONT2) is further configured to selectively carry out the opening or closing of the neutral conductor.

7. The device according to any one of the preceding claims, **characterised in that** it is an electric vehicle charging device.

8. The device according to any one of the preceding claims, wherein, in the single-phase operating mode, the device is adapted to vary the output electric power (Pout) in a first range of values ([P1min; P1max]) having an upper limit, and, in the three-phase operating mode, the device is adapted to vary the electric power output in a second range of values ([P2min; P2max]) having a lower limit.

9. The device according to claim 8, wherein the control module is configured to control the contactor for opening the second and third charging conductors in response to detecting that the difference between the setpoint power (Pcons) and the lower limit (P2min) is less than a first predetermined value.

10. The device according to claim 8 or 9, wherein the control module is configured to control the contactor for closing the second and third phase conductors in response to detecting that the difference between the upper limit (P1max) and the setpoint power (Pcons) is less than a second predetermined value.

11. The device according to any one of the preceding claims, wherein the device is adapted to vary the output electric power between 1.4 kW and 43.5 kW, the device being adapted to vary the output electric power between 1.4 kW and 7.3 kW in the single-phase operating mode, and between 6.9 kW and 43.5 kW in the three-phase operating mode.

12. A charging station suitable for charging electrical equipment with electrical energy, **characterised in that** the charging station comprises a device according to any one of the preceding claims.

13. An electrical equipment configured to operate from electrical energy, **characterised in that** the electrical equipment comprises a device according to any one of claims 1 to 11.

14. The electrical equipment according to claim 13, **characterised in that** the electrical equipment is an electric vehicle configured to be propelled at least partially from electrical energy.

15. An assembly suitable for the simultaneous supply of single-phase and/or three-phase electricity to a plurality of electrical equipment, the assembly comprising a plurality of devices for the selective supply of single-phase and three-phase electricity, at least one of said devices for the selective supply of single-phase and three-phase electricity comprising a device according to any one of claims 1 to 11.
